# EUROPEAN PATENT APPLICATION

(11) **EP 2 020 794 A1**
(43) Date of publication of application: **04.02.2009**
(21) Application number: 07015218.6
(22) Date of filing: 02.08.2007
(51) Int. Cl.: H04L 29/06

(54) **Method for operating a moving network**

(71) Applicant: SIEMENS AKTIENGESELLSCHAFT, 80333 München (DE)
(72) Inventor: Görg, Carmelita Prof., 28357 Bremen (DE); Pangboonyanon, Varaporn, 28195 Bremen (DE); Pittmann, Frank, 12099 Berlin (DE); Udugama, Asanga, 28357 Bremen (DE)

(57) **Abstract**

The invention describes a method for operating a moving network (MO) comprising a mobile router (MR) assigned to a home agent (HA) in a home network (HN), wherein a plurality of local network nodes (LFN, LMN) belong to the moving network (MO) and wherein the moving network (MO) is attachable to different networks comprising the home network (HN) and foreign networks (FN) via the mobile router (MR) by using a mobility protocol, particularly the NEMO-protocol. First, second and third separate groups of addresses (G,G2,G3) are allocated in the home network.

## Description

The invention refers to a method for operating a moving network and a corresponding moving network being operated by such a method.

Moving networks comprise a plurality of local network nodes and enable the attachment to different access points, thereby providing session continuity. To do so, moving networks include a mobile router assigned to a home agent in a home network, wherein the mobile router may attach to different networks comprising the home network as well as foreign networks by using a mobility protocol. A well-known mobility protocol for moving networks is the NEMO Protocol (NEMO = Network Mobility Basic Support Protocol) which is an extension of the Mobile IPv6 Protocol.

In moving networks, the nodes attached to the network may have different functions. Particularly, the local nodes belonging to the moving network may comprise local fixed nodes and local mobile nodes. Local fixed nodes are nodes having a fixed point of attachment in a data transmission session. Local mobile nodes have a point of attachment being changeable in a data transmission session. Furthermore, foreign nodes not belonging to the network may attach to the moving network. Those nodes are called visiting mobile nodes. Up to now, there does not exist an appropriate address management mechanism for the above defined functional nodes.

Therefore, it is an object of the invention to provide a new address management system enabling an easy and flexible data transmission for moving networks and network nodes within and outside those moving networks.

This object is achieved by the independent patent claims. Preferred embodiments are defined in the dependent claims.

According to the invention, first, second and third separate groups of network addresses are allocated in the home network, i.e. the network having a home agent to which the mobile router is assigned. Those separate groups of addresses are assigned to the above described three types of network nodes as follows:
- addresses of the first group are assigned to local fixed nodes;
- addresses of the second group are assigned to local mobile nodes;
- addresses of the third group are assigned to visiting mobile nodes.

Due to this address assignment, the function of the nodes is encoded by the addresses enabling a flexible handling of the data transmission from and to the nodes in dependence on the current function of the respective node.

According to a preferred embodiment of the invention, the addresses of the first group and/or second group and/or third group are assigned by static address configuration where a fixed address is used for the respective nodes which does not change even when the moving network has to be restarted.

In another embodiment of the invention, the addresses of the first group and/or second group and/or third group are assigned by stateless address auto-configuration. This address configuration is done by broadcasting so-called Router Advertisements providing prefixes which are used by the nodes in the network to configure their own addresses. Particularly, Router Advertisements containing an address prefix for the first group of addresses and/or Router Advertisements containing an address prefix for the second group of addresses and/or Router Advertisements containing an address prefix for the third group of addresses are broadcasted by the mobile router, each Router Advertisement indicating to which group of addresses the address prefix contained therein belongs. Hence, an easy mechanism for assigning the group of addresses to the respective functional nodes is provided by this stateless address configuration.

When using stateless auto-configuration, the mobile router, when attached to the home network, preferably receives the address prefixes for the second and/or third group from the home agent in the home network via corresponding messages which indicate to which group of addresses the address prefix contained in the message belong. Furthermore, the mobile router preferably uses a predetermined prefix stored in its configuration information for the first group of addresses. Moreover, when attached to a foreign network, the mobile router preferably broadcasts Router Advertisements containing the same address prefixes for the first and the second group which are used, when the mobile router is attached to the home network. This ensures that the local network nodes always have the same addresses irrespective to which network the moving network is attached. Contrary to that, when attaching to a foreign network, the mobile router broadcasts new address prefixes within the Router Advertisements for the third group of addresses. Those Router Advertisements are received in the mobile router from the access router of the foreign network.

In another embodiment of the invention, the addresses of the first and/or second and/or third group are assigned by stateful address auto-configuration via a DHCP server (DHCP = Dynamic Host Configuration Protocol). Preferably, the DHCP request of a network node specifies, whether the network node is a local fixed node or a local mobile node or a visiting mobile node.

In another embodiment of the invention, the mobile router has a home address in its home network being assigned by static address configuration or stateful or stateless address auto-configuration to the mobile router. Furthermore, when connected to a foreign network, the mobile router receives a care-of-address, preferably by stateless address auto-configuration.

In order to enable a correct transmission of data packets to the visiting mobile nodes in a moving network, the mobile router preferably captures data packets addressed to visiting mobile nodes in its moving network and routes the captured data packets to the corresponding visiting mobile node. This capture mechanism is preferably performed by a well-known proxy neighbor discovery. Moreover, the mobile router preferably maintains a list of the addresses of the visiting mobile nodes in its moving network. The entries in this list preferably have a specified lifetime and each visiting mobile node informs the mobile router periodically that it is reachable in the moving network by the assigned address of the third group of addresses.

In another embodiment of the invention, the mobile router uses standard IP routing when attached to its home network. Contrary to that, when the mobile router is attached to a foreign network, it uses IP routing with mobility function (particularly the NEMO protocol) for the local fixed and local mobile nodes and standard IP routing for the visiting nodes. This enables the visiting mobile nodes to run the mobility client and use the addresses assigned to it as a care-of-address. The mobility client used by the visiting mobile nodes is preferably a Mobile IPv6 client.

In another embodiment of the invention, a local mobile node being attached directly to a foreign network (i.e. without using a moving network) runs the mobility client (particularly a mobile IPv6 client). This enables the mobility management for mobile nodes not located in any moving network.

The above described method may be used in mobile access networks where the mobile router of the moving network is attached to a mobile access network, particularly a 3GPP network and/or a WLAN network.

Beside the above method, the invention also comprises a moving network which can be operated according to any variant of the above described method of the invention.

Embodiments of the invention will be described in detail with respect to the attached drawings, wherein:
- Fig. 1: shows a schematic view of a moving network being operated according to an embodiment of the inven- tion, the moving network being attached to its home network;
- Fig. 2: shows a view analogously to Fig. 1, wherein the moving network is now attached to a foreign net- work;
- Fig. 3: shows a schematic view of several scenarios which may be realized according to the invention; and
- Fig. 4: shows a scenario for mobile access networks wherein the method according to the invention may be used.

The embodiments described hereinafter refer to mobile networks using the Network Mobility Basic Support Protocol NEMO, see e.g. V. Devarapalli, R. Wakikawa, A. Petrescu, and P. Thubert, "Network Mobility (NEMO) Basic Support Protocol", RFC 3963, IETF January 2005. These mobile networks are called moving networks in the following. Moving networks can attach to different points in the Internet by the use of the NEMO Protocol. This protocol is an extension of the well-known mobile IPv6 Protocol and allows session continuity for every network node in the moving network as the network moves. This protocol also allows every network node in the moving network to be reachable while moving around. A moving network based on the NEMO protocol comprises a mobile router which connects the network to the Internet and runs the NEMO protocol with its home agent. The NEMO Protocol is designed so that network mobility is transparent to the network nodes inside the moving network which are called mobile network nodes. In document [1], a mobile network prefix MNP which is an IPv6 prefix delegated to the mobile router and advertised in the moving network is defined. A corresponding table is managed by the home agent which uses the prefixes of the prefix table to determine which mobile network prefixes belong to a particular mobile router in order to do the appropriate packet routing.

As already mentioned before, several types of nodes are defined for moving networks, namely local fixed nodes LFN, local mobile nodes LMN and visiting mobile nodes VMN.

A local fixed node LFN is a node, either a host or a router that belongs to the moving network and is unable to change its point of attachment while maintaining ongoing sessions. Its address is located within a mobile network prefix.

A local mobile node LMN is either a mobile node or a mobile router. The local mobile nodes are assigned to a home link belonging to the moving network and they are able to change their point of attachment while maintaining ongoing sessions. The addresses of local mobile nodes are taken from a mobile network prefix.

A visiting mobile node is either a mobile node or a mobile router. The visiting mobile nodes are assigned to a home link that does not belong to the moving network and they are able to change their point of attachment while maintaining ongoing sessions. Hence, a visiting mobile node corresponds to a local mobile node being connected to a moving network not being its own moving network. The visiting mobile node is temporarily attached to a NEMO link and obtains its address from a mobile network prefix used as a foreign link.

The behaviour of a mobile router in the NEMO Protocol is such that the mobile router always acts as a router for the mobile network nodes behind. However, the mobile router hosts a Mobile IPv6 client also when attaching to foreign networks and provides the Mobile IPv6 functionality on behalf of the local nodes, i.e. for the local fixed nodes LFN and the local mobile nodes LMN. For the visiting mobile nodes VMN, the mobile router purely acts as a router using standard IP routing.

In the NEMO protocol, the egress interface of a mobile router, i.e. the interface to the outside of the moving network, is well defined. It is a mobile network prefix that is configured from a prefix aggregated and advertised by the home agent of the home network. The prefix could be either the prefix advertised on the home link or the prefix delegated to the mobile router. More than one mobile network prefix could be advertised in a moving network. With respect to the ingress address assignment into the mobile network, the NEMO Protocol does not define an address management.

The NEMO protocol has several problems. At first, there is no mechanism to distinguish between local nodes belonging to the mobile network and visiting nodes. Furthermore, there is no mechanism enabling a mobile node to perform MIP/NEMO or not in dependence on its function. Moreover, the NEMO Protocol does not give a solution to enable a mobile node to perform MIP by itself after leaving a moving network.

According to the embodiment of the invention described hereinafter, an appropriate address management for the NEMO Protocol is described which may also be applied to other protocols providing the functionality of moving networks. The above mentioned problems are solved by this address management.

According to the address management described hereinafter, both the mobile router as well as the mobile network nodes within a moving network are enforced to recognize what role they have in the overall network so that they are able to perform correct packet processing by being able to decide on whether to activate or not a mobile IP client.

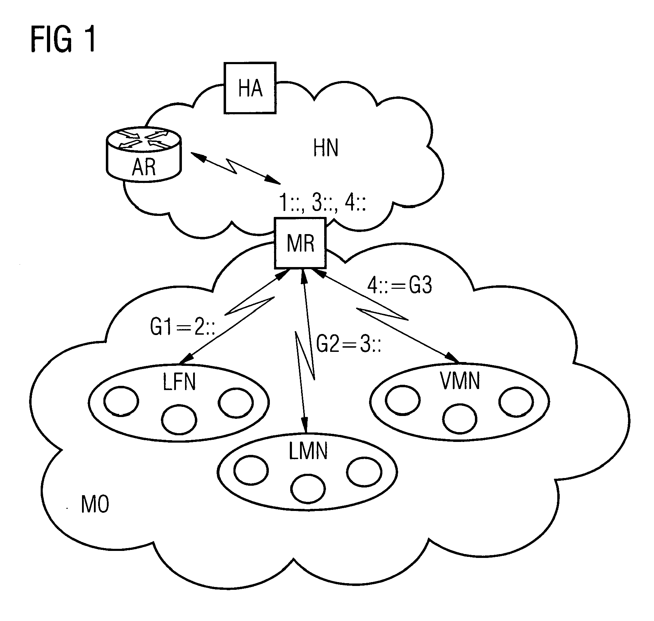

The address management used in a moving network according to one embodiment of the invention is illustrated in Fig. 1. Fig. 1 shows a mobile network MO containing the mobile router MR and nine other network nodes, namely three local fixed nodes LFN, three local mobile nodes LMN and three visiting mobile nodes VMN. The egress interface of the mobile router can be configured by static, stateful or stateless address auto-configuration mechanisms in order to receive a home address HoA in the home network. For static address configuration, a static address is assigned which will not be changed even when the router is restarted. Stateful address auto-configuration means that the assignment of the address is done by the well-known DHCP protocol (DHCP = Dynamic Host Configuration Protocol), particularly by the protocol DHCPv6. According to this protocol, the address is received from a DHCP server. Stateless address auto-configuration is based on Router Advertisements RA which are sent from an access router in the home network and contain a prefix which is used by the mobile router in order to configure its egress address. Fig. 1 shows the scenario, where the mobile router MR being connected to its home network HN (including a home agent HA and an access router AR) configures its egress address by stateless address configuration. To do so, the access router AR of the home network HN advertises a Router Advertisement containing the prefix 1:: for configuring the egress address of the mobile router MR.

With respect to the ingress addresses inside the mobile network MO in Fig. 1, any address auto-configuration mechanism may be used for the local fixed nodes LFN, the local mobile nodes LMN and the visiting mobile nodes VMN. In the embodiment shown in Fig. 1, the stateless auto-configuration is used for each of the nodes LFN, LMN and VMN. To do so, the mobile router MR receives prefixes from the home agent HA via advertisement messages from the access router AR. Beside the above prefix 1:: for the egress interface, a prefix 2:: defining a first group G1 of addresses, is stored in the configuration information of the mobile router and is broadcasted by the mobile router. Moreover, a prefix 3:: defining a second group G2 of addresses and a prefix 4:: defining a third group of addresses are broadcasted to the mobile router MR. Those prefixes 3:: and 4:: are re-broadcasted by the mobile router. The prefix 2:: is used to configure the addresses of the local fixed nodes LFN, the prefix 3:: is used to configure the addresses of the local mobile nodes LMN and the prefix 4:: is used to configure the addresses of the visiting mobile nodes VMN. Instead of using the stateless address auto-configuration, it is also possible to use the static configuration or stateful auto-configuration to get the addresses for the nodes LFN, LMN and VMN. In case that stateless/stateful auto-configuration is used, a new flag as a part of the Router Advertisement messages re-broadcasted by the mobile router as well as of the binding acknowledgement messages BA received from the home agent or an indication over the DHCP-request is used in order to enable the grouping of the nodes.

In a preferred embodiment of the invention, static addresses are used for the local fixed nodes LFN and local mobile nodes LMN. This has the advantage that those nodes are enabled to be reachable from outside, i.e. from the correspondent nodes, even in case that the network interface has been restarted. If the mobile router would advertise that Router Advertisements in the moving network for the local fixed nodes and the local mobile nodes to configure addresses using stateless address auto-configuration mechanism, using this mechanism, these nodes cannot be reached with the same IP address when the network interface has been restarted. Furthermore, by using static addresses, overhead of regular Router Advertisements is reduced since local fixed nodes always go together with their mobile routers.

For configuring the addresses of the visiting mobile nodes, stateless address auto-configuration is used in a preferred embodiment. The sole purpose of the address acquisition of a visiting mobile node is to use this address as the care-of-address CoA in Mobile IPv6 in order to bind to its own home agent which is in another home network than the home agent HA of the home network HN shown in Fig. 1. In this case, the mobile router MR simply acts as a router without active MIP/NEMO client. The address prefix that is made available to the visiting mobile node has to be topological correct, i.e. correct addressing to work with standard routing has to be used. This is easily achieved by using stateless auto-configuration wherein the mobile router MR re-advertises the same prefix that the access router AR issues in its egress network.

Summarized, when the mobile network MO is connected to the home network HN, the ingress addresses in the moving network are divided into three groups, one for each type of network nodes LFN, LMN and VMN. These groups can be in a hierarchy (i.e. also routers within the ingress network) or in a flat network (i.e. all mobile network nodes directly connected to the mobile router MR) with the above described address range separation for each type of network node. Particularly, the mobile router MR in conjunction with the home agent HA and the access routers AR (in connected networks) provide those three groups of addresses in the following manner:
- The group of addresses for the local fixed nodes LFN is any globally unique prefix or a range within a prefix where the home agent HA knows the association between the mobile router MR and the addresses, i.e. the home agent HA has the route to deliver packets destined to the local fixes nodes LFN through its mobile router MR, because local fixed nodes per se always move together with the mobile router MR.
- The group of addresses for the local mobile nodes LMN comprise the addresses configured from an address prefix that is advertised on the home link. Therefore, when local mobile nodes move away from its moving network and attach to a foreign network, it has a valid address (which is then the home address HoA to send the binding update BU to the home agent HA). This range does not lie in the same range for which to mobile router MR obtains its HoA. Nevertheless, the same home agent HA may serve this address range as well.
- The group of addresses for the visiting mobile nodes VMN is any globally unique address range that is topological correct to deliver packets. This is required in order to obtain the care-of-address CoA for any visiting mobile node VMN.
   The address ranges as described above are known by the home agent HA or the access router AR in any given network, they are configured within both the home agents HAs and the access routers ARs.

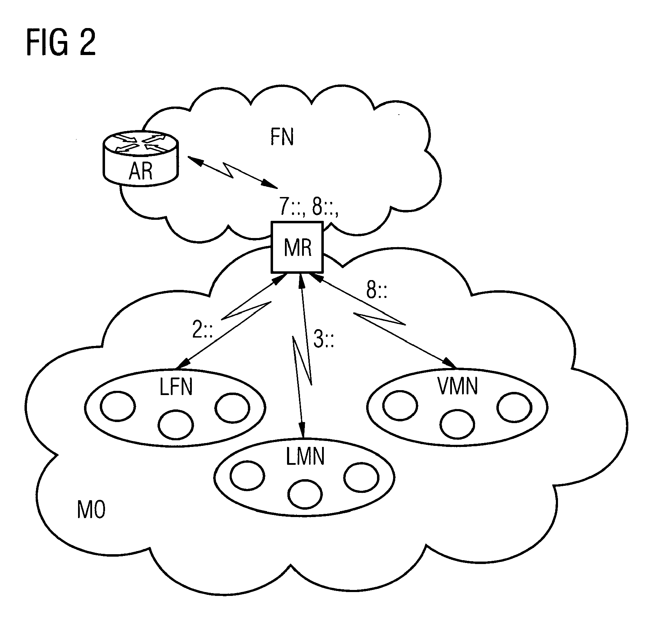

Fig. 2 shows the same mobile network MO as in Fig. 1 but now being attached to a foreign network FN. According to Fig. 2, the prefixes 2:: and 3:: being used for the local fixed nodes LFN and the local mobile nodes LMN in Fig. 1 continue to be used for the nodes LFN and LMN. Contrary to that, a new prefix 8:: is used for configuring the visiting mobile nodes VMN. This prefix is advertised by the access router AR of the foreign network FN and re-broadcasted by the mobile router MR into the mobile network MO. Furthermore, a new prefix 7:: is used for configuring the address of the mobile router MR, wherein the address configured is now the care-of-address CoA of the mobile router. Analogously to the prefix 8::, the prefix 7:: is advertised by the access router AR of the foreign network FN.

As described above, a dedicated ingress address assignment mechanism is provided for both local (fixed and mobile) nodes and visiting nodes. The invention works with all usual assignment methods which are static or stateless or stateful address auto-configuration. For stateless address auto-configuration, the binding acknowledgement messages BA received from the home agent HA contain a flag in each prefix to indicate the type of mobile node, i.e. LFN, LMN or VMN. For stateful address auto-configuration, an indication of the type of mobile node is performed over the DHCP request with which the node indicates what type it is.

Preferably, the above described address management is combined with a modified behaviour of already known functional entities in moving networks. Particularly, the mobile router performs a proxy neighbor discovery only for the visiting mobile nodes. To do so, the mobile router maintains a list that hosts the currently acquired addresses within the moving network. Entries in this list will have a lifetime and periodically each visiting mobile node must inform the mobile router of the use of the care-of-address CoA. The home agents and the access routers have to know the association between the mobile router and the network node addresses to support the grouping of nodes. To do so, the home agents and access routers are configured such that the above described separation of address space into three groups is supported.

Since the mobile router has to perform proxy neighbor discovery for the visiting mobile nodes, the visiting mobile nodes must inform the mobile router periodically of the use of a care-of-address CoA as already mentioned before. In case that a local mobile node perform mobile IP by itself, i.e. after leaving the moving network and being directly connected to another network, its home agent HA has to accept its binding updates BU after the movement out of the moving network. To do so, the home address HoA of the LMN is configured from the prefix which is broadcasted in the home link. Consequently, it is possible for the local node to use the same home address HoA to send the binding update BU when it moves out from the moving network and now acts as an individual mobile node on its own with active MIP client.

The invention as described above has several advantages. Particularly, an address management is established which provides topologically correct IP addresses for the routing protocol in the moving network. Furthermore, the address management enables the communication partners to know what role they have and how to process in terms of routing and activating/deactivating MIP/NEMO functionality. The home agent could also control the traffic, since the home agent can cooperate with the mobile router. Furthermore, the home agent is aware of how to treat packets coming from and going to each group quickly, resulting in a delay reduction.

The mobile router is enabled to quickly identify how to deliver packets coming from and going to each group quickly. Moreover, the mobile router decides either to provide or not to provide the connectivity for visiting mobile nodes. Furthermore, the mobile router could control the traffic from the mobile network nodes behind such as to drop, to process or even to give the priority to process the traffic separately. Furthermore, the mobile nodes are enabled to quickly identify how to process the packets coming and going from the correspondent node.

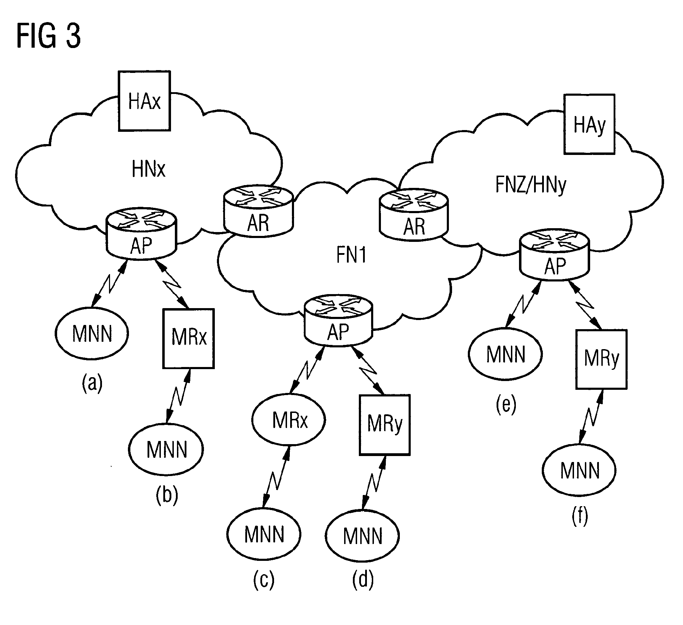

Fig. 3 summarizes the scenarios which are possible due to the address management method as described above. Fig. 3 shows a home network HNx, a foreign network FN1 and a foreign network FN2 also being a home network HNy. The home network HNx is the home network of a moving network having the mobile router MRx. The mobile network node MNN is a local mobile node of the moving network to which the mobile router MRx belongs. The foreign network FN2 is a home network HNy of a moving network to which the mobile router MRy belongs. Fig. 3 further shows the respective home agents HAx and HAy of the networks HNx and HNy, access routers AR between those networks and the foreign network FN1 and corresponding access points AP of each network HNx, FN1 and FN2/HNy. Fig. 3 specifies six scenarios, designated by letter (a) to (f).

In case (a), the mobile network node MNN is directly attached to its home network HNx. This is recognized by the network node so that the node does not run the MIP client and uses standard IP routing.

In scenario (b), the network node MNN is in its own moving network and, thus, corresponds to a local mobile node. This is recognized by the network node so that an MIP client does not run on the node. Furthermore, MRx does not use the MIP/NEMO client because it is at its home network and it acts as a router for the network node using standard IP routing.

In scenario (c), the network node MNN is in its own moving network, but the moving network is now connected to the foreign network FN1. As a consequence, the router MRx now uses the MIP/NEMO client and performs MIP/NEMO routing for the network node. Furthermore, the mobile network node does not run a MIP client.

In scenario (d), the network node MNN is attached to the foreign moving network having the mobile router MRy. This foreign moving network is also attached to a foreign network, namely FN1. As a consequence, the network node acts as a visiting mobile node and runs its MIP client. Furthermore, as the network node is a visiting mobile node, the mobile router MRy does not perform MIP/NEMO routing for this node and uses standard IP routing instead.

In scenario (e), the network node MNN is connected directly to the foreign network FN2 with the consequence that it runs the MIP client.

In scenario (f), the mobile network node MNN is attached to the moving network having the mobile router MRy, thus acting as a visiting mobile node. Consequently, the mobile node runs the MIP client. The mobile router MRy is attached to its home network HNy and, thus, performs standard routing without using the MIP/NEMO Protocol.

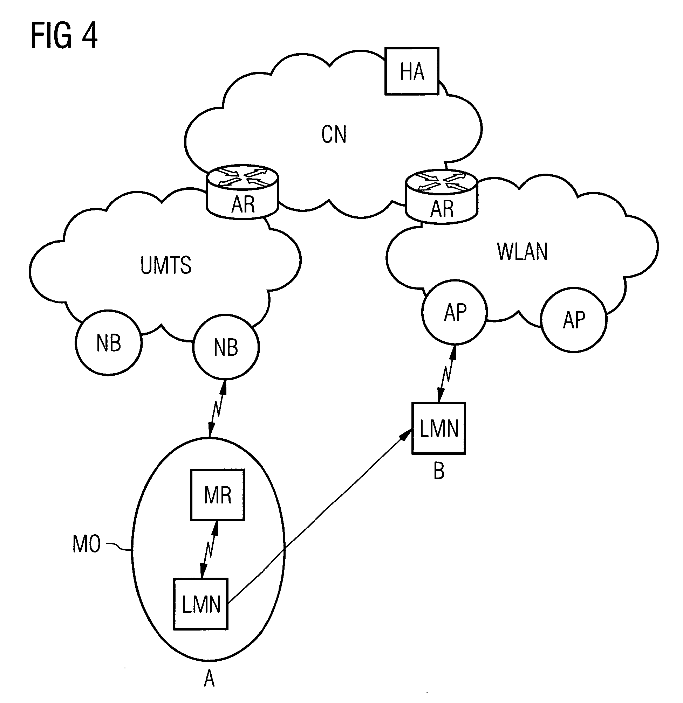

The above described invention may be used in a plurality of networks. Particularly, the invention may be used for a moving network being attached to mobile access networks. Fig. 4 shows such a scenario. An evolved packet core network CN used in the newly developed SAE/LTE 3GPP networks is connected via access routers AR to a UMTS network UMTS and a WLAN network WLAN. In the scenario (A) in the left part of Fig. 4, a moving network MO comprising a mobile router MR in the form of a user equipment UE and a local mobile node LMN in the form of a user equipment UE is connected to the UMTS network UMTS via a node B NB. The network UMTS has a subnet address different from the subnet address of the network WLAN and functions as a home network for the moving network MO.

By using the address management according to the invention, the local mobile node LMN may now move out of the moving network MO and connect to another access network, namely the network WLAN. This is shown in scenario (B) in the right part of Fig. 4. The local mobile node LMN will now be a visiting mobile node for the network WLAN. The local mobile node will now activate its MIP client in order to enable mobility functionality. The above depicted moving network comprising a pair of user equipments may also be a personal network or a personal area network.

## Claims

1. A method for operating a moving network (MO) comprising a mobile router (MR) assigned to a home agent (HA) in a home network (HN), wherein a plurality of local network nodes (LFN, LMN) belong to the moving network (MO) and wherein the moving network (MO) is attachable to different networks comprising the home network (HN) and foreign networks (FN) via the mobile router (MR) by using a mobility protocol, wherein:
- at least first, second and third separate groups of addresses (G1, G2, G3) are allocated in the home network (HN);
- addresses of the first group (G1) are assigned to local network nodes being local fixed nodes (LFN) having a fixed point of attachment in a data transmission session;
- addresses of the second group (G2) are assigned to local network nodes being local mobile nodes (LMN) having a point of attachment being changeable in a data transmission session;
- addresses of the third group (G3) are assigned to network nodes being visiting mobile nodes (VMN) being attached to the moving network (MO) and not belonging to the moving network (MO).

2. The method according to claim 1, wherein the addresses of the first group (G1) and/or second group (G2) and/or third group (G3) are assigned by static address configuration.

3. The method according to claim 1 or 2, wherein the addresses of the first group (G1) and/or second group (G2) and/or third group (G3) are assigned by stateless address auto-configuration.

4. The method according to claim 3, wherein Router Advertisements containing an address prefix for the first group (G1) and/or Router Advertisements containing an address prefix for the second group (G2) and/or Router Advertisements containing an address prefix for the third group (G3) are broadcasted by the mobile router (MR), each Router Advertisement indicating to which group of addresses the address prefix contained therein belongs.

5. The method according to claim 4, wherein the mobile router (MR), when attached to the home network (HN), receives the address prefixes for the second and/or third group (G1, G2, G3) from the home agent (HA) in the home network (HN) via corresponding messages which indicate to which group of addresses the address prefix contained in the message belongs, whereas the mobile router (MR) uses a predetermined address prefix in its configuration information as the address prefix for the first group (G1) of addresses.

6. The method according to claim 4 or 5, wherein the mobile router (MR), when attached to a foreign network (FN), broadcasts Router Advertisements containing the same address prefixes for the first and second group (G1, G2) which are used, when the mobile router (MR) is attached to the home network (HN).

7. The method according to one of claims 4 to 6, wherein the mobile router (MR), when attached to a foreign network (FN), broadcasts Router Advertisements containing an address prefix for the third group (G3) which Router Advertisements are received from the access router (AR) of the foreign network (FN).

8. The method according to one of the preceding claims, wherein the addresses of the first and/or second and/or third group (G1, G2, G3) are assigned by stateful address auto-configuration via a DHCP server.

9. The method according to claim 8, wherein the DHCP request of a network node specifies, whether the network node (LFN, LMN, VMN) is a local fixed node (LFN) or a local mobile node (LMN) or a visiting mobile node (VMN).

10. The method according to one of the preceding claims, wherein the mobile router (MR) has a home address in its home network (HN) being assignd by static address configuration or stateful or stateless address auto-configuration to the mobile router.

11. The method according to one of the preceding claims, wherein the mobile router (MR) receives a care-of-address when connected to a foreign network (FN), preferably by stateless address auto-configuration.

12. The method according to one of the preceding claims, wherein the mobile router (MR) captures data packets addressed to visiting mobile nodes (VMN) located in its moving network (MO) and routes the captured data packets to the corresponding visiting mobile node (VMN).

13. The method according to claim 12, wherein the mobile router (MR) captures the data packets by proxy neighbor discovery.

14. The method according to claim 12 or 13, wherein the mobile router (MR) maintains a list of the addresses of the visiting mobile nodes (VMN) in its moving network (MO).

15. The method according to claim 14, wherein the entries in the list have a specified lifetime and wherein each visiting mobile node (VMN) informs the mobile router (MR) periodically that it is reachable in the moving network via the assigned address of the third group (G3).

16. The method according to one of the preceding claims, wherein the mobile router (MR), when attached to its home network (HN), uses standard IP routing.

17. The method according to one of the preceding claims, wherein the mobile router (MR), when attached to a foreign network (FN), uses IP routing with mobility function, particularly the NEMO protocol, for the local fixed and local mobile nodes (LFN, LMN) and standard IP routing for the visiting mobile nodes (VMN).

18. The method according to one of the preceding claims, wherein the visiting mobile nodes (VMN) run a mobility client, particularly a Mobile IPv6 client.

19. The method according to one of the preceding claims, wherein a local mobile node (LMN) being attached directly to a foreign network (FN) runs a mobility client, particularly a Mobile IPv6 client.

20. The method according to one of the preceding claims, wherein the mobile router (MR) of the moving network (MO) is attached to a mobile access network, particularly a 3GPP network and/or a WLAN network.

21. A moving network (MO) comprising a mobile router (MR) assigned to a home agent (HA) in a home network (HN), wherein a plurality of local network nodes (LFN, LMN) belong to the moving network (MN) and wherein the moving network (MN) is attachable to different networks comprising the home network (HN) and foreign networks (FN) via the mobile router (MR) by using a mobility protocol,
wherein the mobile network is operable such that:
- first, second and third separate groups of addresses (G1, G2, G3) are allocated in the home network (HN);
- addresses of the first group (G1) are assigned to local network nodes being local fixed nodes (LFN) having a fixed point of attachment in a data transmission session;
- addresses of the second group (G2) are assigned to local network nodes being local mobile nodes (LMN) having a point of attachment being changeable in a data transmission session;
- addresses of the third group (G3) are assigned to network nodes being visiting mobile nodes (VMN) being attached to the moving network (MO) and not belonging to the moving network (MO).

22. The moving network according to claim 21, wherein the moving network (MO) is operable by a method according to one of claims 2 to 20.
